# EUROPÄISCHE PATENTSCHRIFT

(11) **EP 2 996 862 B1**
(45) Veröffentlichungstag und Bekanntmachung des Hinweises auf die Patenterteilung: **12.12.2018**
(21) Anmeldenummer: 14723431.4
(22) Anmeldetag: 12.05.2014
(51) Int. Cl.: B29C 47/68, B29C 47/08, B29C 47/92

(54) **SCHMELZEFILTER MIT EINER ANTRIEBSVORRICHTUNG FÜR EINE DREHBARE SIEBSCHEIBE**
MELT FILTER COMPRISING A DRIVE DEVICE FOR A ROTATABLE DISK SCREEN
FILTRE POUR MATIÈRES EN FUSION AVEC DISPOSITIF D'ENTRAÎNEMENT POUR DISQUE DE TAMIS ROTATIF

(30) Priorität: 16.05.2013 DE 102013209137; 27.08.2013 DE 102013216973
(43) Veröffentlichungstag der Anmeldung: 23.03.2016
(73) Patentinhaber: Gneuss GmbH, 32549 Bad Oeynhausen (DE)
(72) Erfinder: GNEUSS, Detlef, 32545 Bad Oeynhausen (DE); GNEUSS, Stephan, Bad Oeynhausen 32545 (DE); GNEUSS, Daniel, Charlotte 28277 (US)
(74) Vertreter: Tarvenkorn, Oliver
(86) Internationale Anmeldenummer: PCT/EP2014/059631
(87) Internationale Veröffentlichungsnummer: WO 2014/184132

(56) Entgegenhaltungen:
- EP-A1- 0 554 237
- EP-A1- 1 053 854
- EP-A2- 0 379 966
- WO-A1-92/16351
- DE-A1- 4 212 928
- US-A- 4 486 304
- US-A- 5 141 631
- US-A- 5 141 631

## Beschreibung

Die Erfindung betrifft einen Schmelzefilter, insbesondere zur Filterung von Kunststoffschmelzen in bzw. im Anschluss von Extrudern, mit einer Antriebsvorrichtung zum schrittweisen Drehantreiben einer Siebscheibe die mindestens einen Siebeinsatz haltert, wobei zumindest einer der Siebeinsätze innerhalb des Schmelzefilters derart in einen Schmelzestrom bewegbar ist, dass der Siebeinsatz gegenüber einer Schmelzezuführöffnung liegt, und mit einem Schusskolben für eine Rückspülung und/oder Vorflutung.

Aus der DE 103 26 487 A1 ist eine Vorrichtung zur Bereitstellung einer Schmelze bekannt, die bereits einen Schmelzefilter mit einer Schmelzereinigungsstation offenbart, in der ein Schusskolben gereinigte Schmelze in zur Schmelze-Flussrichtung gegenläufigen Richtung durch schlitzartige Teilbereiche des Schmelzefilters zu pressen vermag.

Die EP 554 237 A1 offenbart eine Filtriervorrichtung für verunreinigte Fluide, bei der ein auf einem Siebträgerkörper angeordneter Siebeinsatz zwischen einer Filtrierstellung, einer Rückspülstellung sowie einer zur Siebeinsatzwechselstellung verschiebbar ist. Als vorteilhaft wird angesehen, dass der Siebträgerkörper nicht drehbar, sondern axial hin und her verschiebbar ist, so dass der Siebeinsatz nur für einen tatsächlichen Wechsel in die Siebeinsatzwechselstation verschoben werden muss. Diese Filtriervorrichtung weist einen Vorratstraum auf, aus dem mittels eines Kolbens bereits gereinigte Schmelze einerseits zur Aufrechterhaltung des Drucks am Ausgang der Filtriervorrichtung als auch zur Rückspülung in der Filtriervorrichtung verwendet wird. Dieser Kolben wird bevorzugt durch einen eigenen, von der Bewegung des Siebträgerkörpers unabhängigen Antrieb angetrieben.

Die WO 92/16351 A1 offenbart ebenfalls eine Filtriervorrichtung für zu reinigende Fluide, die einen axial verschiebbaren Siebträgerkörper aufweist, in dem ein Vorratsraum vorgesehen ist, der über einen Kolben mit gereinigter Schmelze gefüllt und zum Zwecke der Rückspülung von Siebeinsätzen geleert werden kann. Der Kolben weist einen vom Antrieb für den Siebträgerkörper unabhängigen Antrieb auf. Alternativ ist der Kolben im Vorratsraum des axial verschiebbaren Siebträgers derart integriert, dass über spezielle Mitnehmer bei einer Bewegung des Siebträgerkörpers der Kolben festgehalten wird, so dass durch die Bewegung des Siebträgerkörpers der Vorratsraum gefüllt bzw. geleert werden kann. Eine direkte Verbindung zwischen dem Kolben und dem Antrieb für den Siebträgerkörper besteht jedoch nicht.

Aus der DE 35 22 050 A1 ist ein Schmelzefilter mit einer rotierenden Siebscheibe für die Reinigung von insbesondere von Extrudern abgegebenen Kunststoffschmelzen bekannt, bei dem in einem Gehäuse eine Siebscheibe mit mehreren entlang einer Kreisbahn angeordneten Siebsegmenten rotierbar gelagert ist. Die Siebscheibe wird mittels eines Klinkenantriebs gedreht, so dass die Filterelemente nacheinander fluchtend zu einem Schmelze-Kanal bringbar sind.

Die US 5,141,631 offenbart einen Kunststofffilter mit Rückspülpumpe, bei dem ein Siebrad durch einen Siebradantrieb drehantreibbar ist. Weiterhin wird eine Rückspülpumpe, deren Kolben von einer Hydraulikenergiequelle antreibbar ist offenbart. Es sind dabei aufwändig zwei getrennte Antriebe vorgesehen. Die beide von einem Zeitglied gesteuert werden.

Die US 4,486,304 offenbart eine feststehende Siebscheibe, die von einer drehbaren Rückspülvorrichtung übergriffen wird. Die Rückspülung erfolgt hier nicht über einen Schusskolben, sondern wird vom intern aufgebauten Druck der gereinigten Schmelze initiiert.

Die EP 1 053 854 A1 offenbart eine Filtereinrichtung für die Reinigung von Kunststoffschmelzen, bei dem ein Siebrad mittels eines Antriebskolbens drehantreibbar ist. Über eine Pumpe und einen Accelerator sind die Siebelemente des Siebrades rückspülbar. Sowohl die Siebscheibe als auch die Pumpe sowie der Accelerator weisen aufwändig jeweils eigene Antriebe auf.

Die DE 42 12 928 A1 offenbart einen Filter für Kunststoffschmelzen, bei dem ein Druckmittelzylinder eine Siebscheibe anzutreiben vermag. Die Filtervorrichtung weist lediglich eine Siebwechselstation, nicht jedoch eine Rückspülstation, und damit keinen Schusskolben auf.

Die EP 379 966 A2 betrifft eine Siebvorrichtung zur Reinigung von Kunststoffschmelzen, die mit einer drehantreibbaren Siebscheibe arbeitet und bereits eine Rücksprülung offenbart, die jedoch ganz ohne einen Rückspül- bzw. Schusskolben auskommt. Hier wird der Druck in der gereinigten Schmelze für die Rückspülung verwendet. Über ein Absperrventil im Rückspülkreis kann die Rückspülung initiiert werden.

Die WO 92/16351 A1 betrifft eine Filtervorrichtung für zu reinigende Fluide, die mit linear verschiebbaren Siebträgerkörpern arbeitet. Durch eine aufwendige Mimik kann die Linearverschiebeinrichtung für den linear verschiebbaren Siebträgerkörper mit dem linear verschiebbaren Schusskolben für die Rückspülung fest verbunden werden.

Die DE 554 237 A1 betrifft eine Filtriervorrichtung für verunreinigte Fluide und Verfahren zu ihrem Betrieb, bei der linear verschiebbare Siebträgerkörper zum Einsatz kommen. Es wird zwar erwähnt, dass der Vorschub des Schusskolbens den Antrieb für den Siebträgerkörper ausnutzen könnte. Es wird jedoch angeregt, getrennte Antriebe für den Schusskolben und den Siebträgerkörper zu verwenden.

Die Erfindung geht von der Aufgabe aus, ein Schmelzefilter der eingangs genannten Art derart auszubilden, dass sich die Antriebsvorrichtung für die Rückspülung und/oder Vorflutung vereinfacht.

Die Aufgabe wird erfindungsgemäß für ein Schmelzefilter der eingangs genannten Art durch die im Patentanspruch 1 angegebenen Merkmale gelöst. Vorteilhafte Ausbildungen sind in den abhängigen Patentansprüchen angegeben.

Die Aufgabe wird erfindungsgemäß dadurch gelöst, dass der Schusskolben mit der Antriebsvorrichtung verbunden, und über die Antriebsvorrichtung für eine Rückspülung und/oder Vorflutung antreibbar ist.

Dadurch wird die Antriebsvorrichtung in die Lage versetzt, gleichzeitig die Siebscheibe zu drehen sowie die Rückspülung und/oder Vorflutung zu betätigen, so dass man sich einen zweiten Antrieb für den Schusskolben sparen kann. Anders als bei einem axial verschiebbaren Siebeinsatz, bei dem der Siebeinsatz nur entweder im Schmelze-Kanal oder im Rückspülkanal angeordnet ist, und bei dem Schutzmaßnahmen insbesondere bezüglich eines zu hoch ansteigenden Druckes im Rückspülkolben ergriffen werden müssen, sind durch die Verwendung einer Siebscheibe sowohl im Schmelze-Kanal als auch im in der Reinigungsstation gleichzeitig Siebeinsätze angeordnet, die auch gleichzeitig durchströmt werden können, so dass es keiner zusätzlichen Schutzmaßnahmen bedarf.

Es empfiehlt sich, dass die Antriebsvorrichtung einen Klinkenantrieb mit einer in einen Zahnkranz der Siebscheibe eingreifenden Klinke oder einen auf einen Zahnkranz der Siebscheibe einwirkenden über einen Hebel angetriebenen Freilauf aufweist.

Bei beiden Antriebvorrichtungen wird eine translatorische Bewegung in eine Rotationsbewegung umgewandelt, die für den Antrieb der Siebscheibe benötigt wird. Die translatorische Komponente der Antriebsvorrichtung ist dabei gleichzeitig zum Antrieb des Schusskolbens nutzbar.

Es hat sich als vorteilhaft erwiesen, dass zwischen der Antriebsvorrichtung und dem Schusskolben eine Kupplungsvorrichtung vorgesehen ist, mittels derer der Schusskolben für die Rückspülung und/oder Vorflutung mit der Antriebsvorrichtung gekoppelt ist.

Dadurch ist die Kopplung zwischen Antriebsvorrichtung und Schusskolben flexibel. Wenn nicht bei jeder Umdrehung oder Taktung gespült werden muss, ist es vorteilhaft, wenn der Schusskolben für die Rückspülung und/oder Vorflutung über die Kupplungsvorrichtung wahlweise verriegelbar oder entkoppelbar ist.

Es hat sich als vorteilhaft erwiesen, dass eine Steuer- bzw. Regelvorrichtung vorgesehen ist, über welche die Kupplungsvorrichtung in ihrer Wirkweise der Verbindung programmier- bzw. einstellbar ist, so dass der Schusskolben variabel zwischen fest und lose gekoppelt einstellbar mit der Antriebsvorrichtung gekoppelt ist, wobei die Kopplung überhaupt aber auch der Hub, das Maß und/oder der Füllgrad des Schusskolbens einstellbar sein können.

Erfindungsgemäß kann der Schusskolben im Aus- oder Einlaufblock angeordnet sein.

In vorteilhafter Weise kann die Antriebsvorrichtung einen Hubkolben aufweisen.

Die Erfindung wird nachfolgend anhand von in der Zeichnung dargestellten Ausführungsbeispielen näher erläutert. Es zeigen:
- Figur 1: eine Draufsicht auf einen erfindungsgemäßen Schmelzefilter mit einer Siebscheibe mit auswechselbaren Siebeinsätzen sowie einem Schusskolben für eine Rückspülung und/oder Vorflutung in einer ersten Arbeitsstellung,
- Figur 2: eine Draufsicht auf den erfindungsgemäßen Schmelzefilter gemäß Figur 1 in einer zweiten Arbeitsstellung,
- Figur 3: eine Draufsicht auf den erfindungsgemäßen Schmelzefilter gemäß Figur 1 in einer dritten Arbeitsstellung,
- Figur 4: eine perspektivische Ansicht der Antriebsvorrichtung des erfindungsgemäßen Schmelzefilters gemäß Figur 3.,
- Figur 5: einen erfindungsgemäßen Schmelzefilter mit vereinfacht aufgebauter Antriebsvorrichtung, und

- Figur 6: einen erfindungsgemäßen Schmelzefilter mit einem Freilaufantrieb.

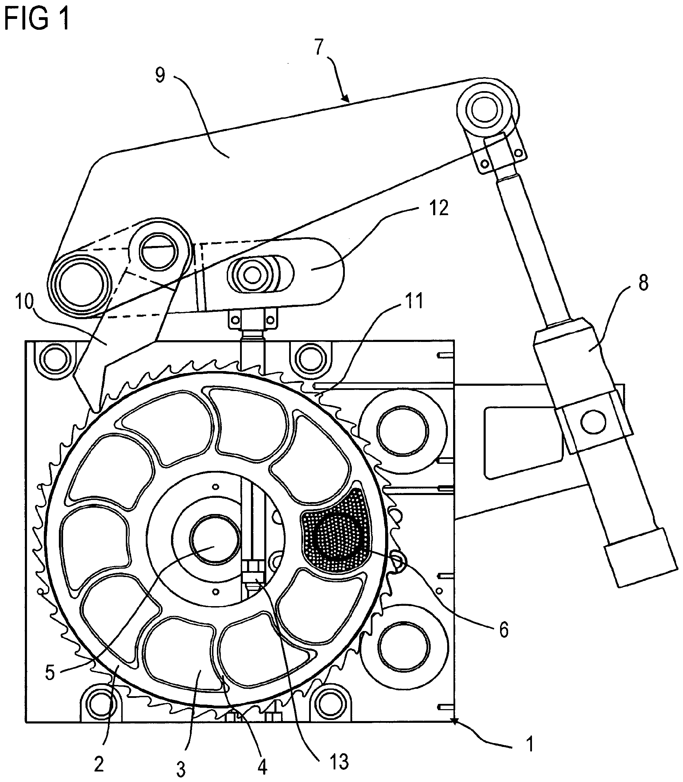

In der Figur 1 ist ein Schmelzefilter 1 mit einer gemäß Ausführungsbeispiel kreisrunden Siebscheibe 2 dargestellt, in der ringförmig mehrere ggf. auswechselbare Siebeinsätze 3 eingesetzt und durch Trennstege 4 gegeneinander abgeteilt sind. Üblicherweise sind etwa zehn bis vierzehn Siebeinsätze 3 in der Siebscheibe 2 vorgesehen. Die Siebscheibe 2 wirkt mit ihren auswechselbare Siebeinsätzen 3 als Schmelzefilter und kann durch Drehung um ihre Achse 5 jeweils teilweise in eine Filter- und eine Reinigungs- und/oder eine Vorflutstellung gebracht werden.

Der Schmelzefilter 1 besteht aus zwei Plattenkörpern, von denen nur einer der Übersichtlichkeit halber dargestellt ist. Die in Filterstellung befindlichen Siebeinsätze 3 stehen gegenüber einer Schmelzezuführöffnung 6 des einen Plattenkörpers, welche diese Bereiche mit zu filternder Schmelze beaufschlagt, und sich über mehrere Siebeinsätze 3 erstrecken kann. Die Schmelzezuführöffnung 6 wird dabei von einem Schmelzekanal (nicht dargestellt) gespeist.

Die Siebscheibe 2 kann durch eine Antriebsvorrichtung um ihre Achse 5 derart bewegt werden, dass sich immer neue Siebeinsätze 3 vor der Schmelzezuführöffnung 6 befinden und den Schmelzestrom filtern. Siebeinsätze 3, die sich in Filterstellung bereichsweise zugesetzt haben, können durch einen Druckanstieg vor den Siebeinsätzen 3 des Schmelzefilters 1 erkannt werden. Durch die Drehung bleibt die zur Verfügung stehende freie Siebfläche jedoch immer konstant.

Als Antriebsvorrichtung zur Rotation der Siebscheibe 2 um die zentrale Achse 5 fungiert ein Klinkenantrieb 7, der mittels eines Hubkolbens 8 über einen Antriebshebel 9 eine Klinke 10 betätigt, die in die Zähne eines am Umfang der Siebscheibe 2 angebrachten Zahnkranzes 11 eingreift und durch die Bewegung die Siebscheibe 2 in bekannter Weise weiterdreht.

Über eine Kupplungsvorrichtung 12 zum Verbinden oder Verriegeln wirkt ein Schusskolben 13 für eine Rückspülung und/oder eine Vorflutung gemeinsam mit dem Antriebshebel 9 des Klinkenantriebs 7. Dabei kann die Kupplungsvorrichtung 12 mit dem Antriebshebel 9 phasenweise verriegelt oder gekoppelt, oder aber auch über eine oder mehrere Phasen oder gar Runden entkoppelt sein. Dadurch wird im entkoppelten Fall bei Betätigung der Antriebsvorrichtung lediglich die Siebscheibe 2 mit den Siebeinsätzen 3 weiter gedreht, so dass vor die Schmelzezuführöffnung 6 immer ein neuer Siebeinsatz 3 platziert wird, eine Rückspülung oder Vorflutung jedoch unterbleibt. Im über die Kupplungsvorrichtung 12 gekoppelten Zustand des Antriebshebels 9 mit dem Schusskolben 13 dagegen wird auch dieser und bewirkt eine Rückspülung oder Vorflutung des vor der entsprechenden Öffnung liegenden Siebeinsatzes 3, bevor dieser in die Filterposition vor die Schmelzezuführöffnung 6 gedreht wird.

In der Darstellung gemäß Figur 1 hat der Hubkolben 8 den Antriebshebel 9 angehoben und die Klinke 10 vorgespannt. Der Schusskolben 13 verblieb bei der Aufwärtsbewegung des Antriebshebels 9 in der Ruheposition, da über die Kupplungsvorrichtung 12 der Schusskolben 13 entkoppelt war.

Die Kupplungsvorrichtung 12, hier ein Verriegelungshebel kann beispielsweise mittels einer elektromechanischen oder hydraulischen Verriegelung mit dem Antriebshebel 9 gekoppelt werden. Dies kann durch vorgebbare Einstellungen oder Programmierungen erfolgen, mittels derer beispielsweise der Hub, das Maß und/oder der Füllgrad des Schusskolbens 13 einstellbar sind.

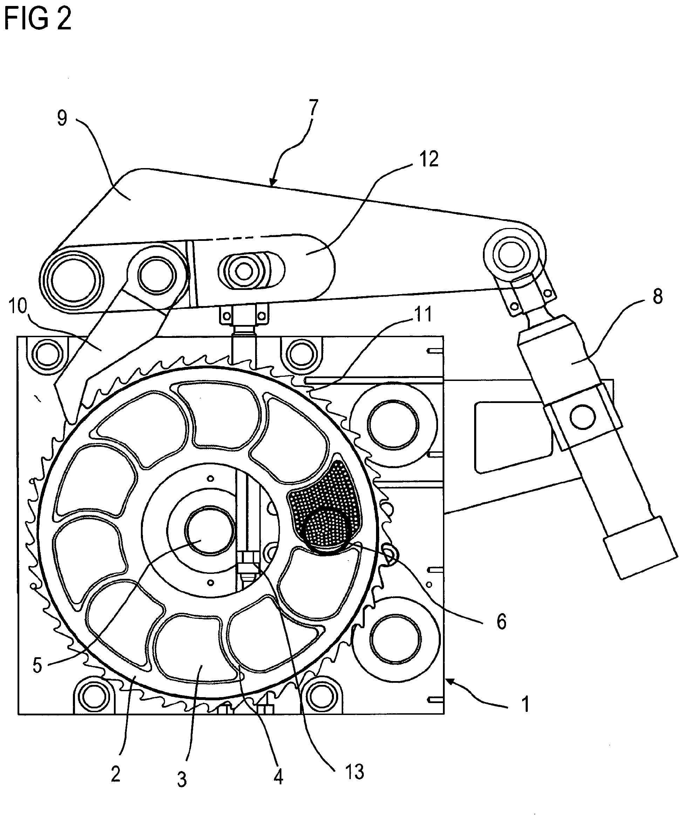

In der Figur 2 ist nun der Schmelzefilter 1 gemäß Figur 1 dargestellt, der sich jetzt in einer zweiten Arbeitsstellung befindet. Dazu wurde der Antriebshebel 9 durch den Hubkolben 8 abgesenkt und die Klinke 10 hat über den Zahnkranz 11 die Siebscheibe 2 mit den Siebeinsätzen 3 weiter gedreht. Der Schusskolben 13 sowie der Verriegelungshebel blieben bei dieser Bewegung des Hubkolbens 8 und des Antriebshebels 9 in ihrer Lage gemäß Figur 1, da weiterhin der Verriegelungshebel nicht mit dem Antriebshebel 9 über die Kupplungsvorrichtung 12 gekoppelt ist.

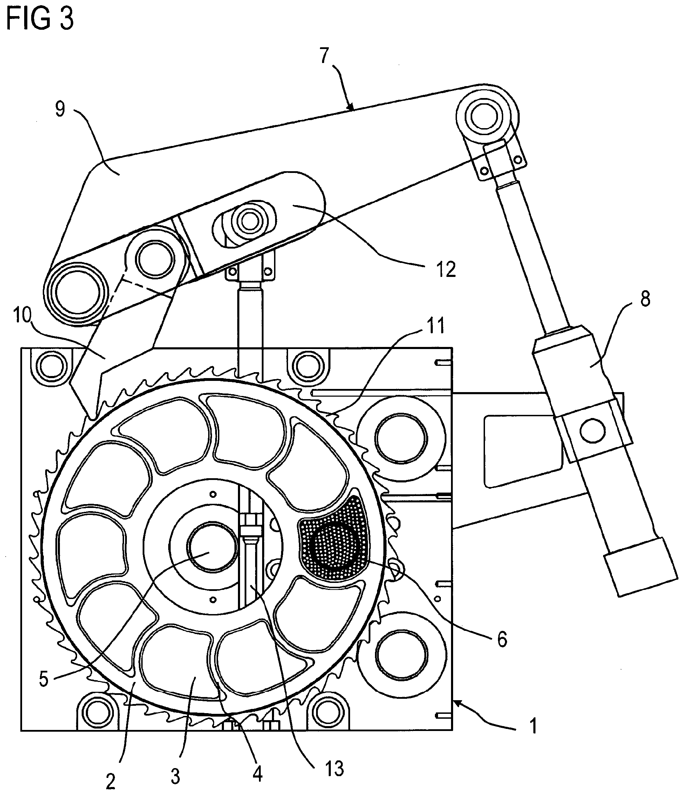

Die Figur 3 zeigt den Schmelzefilter 1 gemäß Figur 1, der sich nun in einer dritten Arbeitsstellung befindet. Dazu wurde der Antriebshebel 9 durch den Hubkolben 8 angehoben und die Klinke 10 über den Zahnkranz 11 auf den nächsten Zahn in Stellung gebracht. Die Siebscheibe 2 verharrte in ihrer Stellung. Der Schusskolben 13 war nun über die Kupplungsvorrichtung 12 mit dem Antriebshebel 9 gekoppelt, so dass er angehoben und in Bereitschaft zur Rückspülung oder Vorflutung gebracht wurde.

Die nächste Betätigung des Hubkolbens 8 bringt nun den Antriebshebel 9 in seine Abwärtsposition und die Klinke 10 dreht die Siebscheibe 2 mit den Siebeinsätzen 3 weiter. Gleichzeitig wirkt aufgrund der Koppelung der Antriebshebel 9 mit dem Schusskolben 13 über die Kupplungsvorrichtung 12 der Antrieb auf den Schusskolben 13, so dass durch Betätigung desselben die Rückspülung oder Vorflutung durchgeführt wird. Nach diesem Verfahrensschritt gelangt man dann wieder in die Position gemäß Figur 2. Nun kann entweder der Schusskolben 13 gekoppelt bleiben, so dass er mehrmals hintereinander betätigt wird und mehrere Rückspül- oder Vorflutvorgänge durchführt. Er kann aber auch wieder entkoppelt werden, so dass der Reinigungsvorgang oder die Vorflutung während des fortgesetzten Antriebs der Siebscheibe 2 vorerst nicht mehr wiederholt wird.

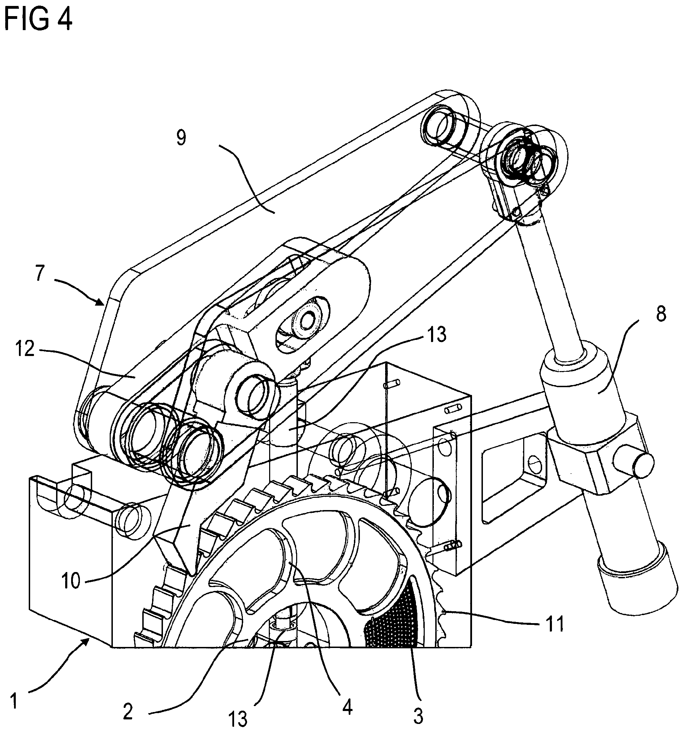

In der Figur 4 ist die Antriebsvorrichtung des Schmelzefilters 1 in der dritten Arbeitsstellung gemäß Figur 3 in perspektivischer Ansicht teilweise transparent dargestellt. Die Verriegelung oder Koppelung des Antriebshebel 9 über die Kupplungsvorrichtung 12 mit dem Schusskolben 13 kann nun derart erfolgen, dass von außen mittels einer elektromechanischen Vorrichtung (nicht dargestellt) in einer Arbeitsstellung gemäß Figur 2 beispielsweise ein Sperrstift (nicht dargestellt) in Verriegelungsstellung gebracht wird, wobei diese an unterschiedlichen Positionen liegen kann, die beispielsweise den Hub des Schusskolbens 13 verändern. Nehmen die Verriegelungsmittel diese Position beim nächsten Mal wieder ein, kann die elektromechanische Vorrichtung, beispielsweise ein Hubmagnet, den Sperrstift wieder in seine Entriegelungsposition bringen.

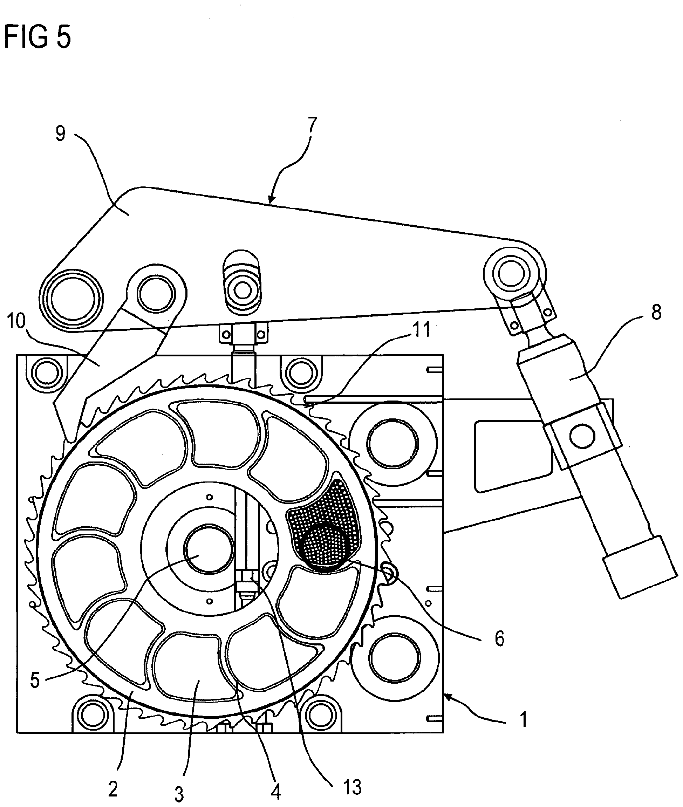

Figur 5 zeigt eine vereinfacht dargestellte Antriebsvorrichtung für den Schusskolben 13. Der Schusskolben 13 ist hier direkt mit dem Antriebshebel 9 des Klinkenantriebes 7 verbunden. Die zwischengeschaltete Kupplungsvorrichtung 12 nach den Figuren 1 bis 4 fehlt. Dennoch kann hier der Weg des Schusskolbens 13 und / oder dessen Füllhub beeinflusst werden. Dazu ist im Antriebshebel 9 ein Langloch vorgesehen. Der darin geführte Anschluss des Schusskolbens 13 kann über eine nicht dargestellte Regelvorrichtung in unterschiedlichen Positionen im Langloch festgesetzt werden.

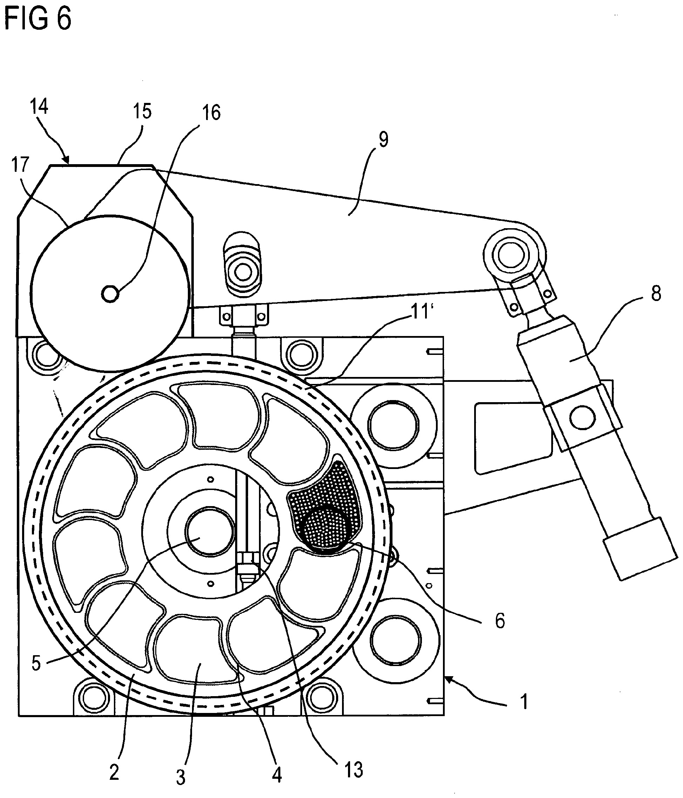

Figur 6 zeigt eine Antriebsvorrichtung, bei der anstelle eines Klinkenantriebs ein Freilauf 14 bzw. Freilaufgetriebe vorgesehen ist. Der Freilauf 14 sitzt in einem Gehäuse 15, welches am Schmelzefilter 1 befestigt ist. Der Antriebshebel 9 wirkt auf die zentrale Antriebswelle 16. Über nicht dargestellte Klemm- bzw. Sperrelemente ist der abtriebsseitige mit einem außenliegenden Zahnkranz versehene Außenring 17 des Freilaufs 14 drehantreibbar. Der Außenring 17 kämmt mit einem Zahnkranz 11' der Siebscheibe 2.

Auch hier ist der Schusskolben 13 für den Rückspül- und / oder Vorflutvorgang mit dem Antriebshebel 9, wie schon aus Figur 5 ersichtlich gekoppelt.

In Vorflutstellung ist die Siebscheibe 2 zwischen den parallel angeordneten Plattenkörpern innerhalb eines Schmelzevorflutkanals gehalten, wobei in Flussrichtung der Schmelzevorflutströmung die Vorflutöffnung für die Beaufschlagung der Siebeinsätze 3 der Siebscheibe 2 vorgesehen ist. Durch die Rotation der Siebscheibe 2 um die zentrale Achse 5 werden die Siebeinsätze 3 nacheinander in den von der Vorflutöffnung überstrichenen Bereich und anschließend vor die Schmelzezuführöffnung 6 gedreht.

Die vorliegende Erfindung betrifft einen Kolbenantrieb, bei dem der Schusskolben 13 für die Rückspülung und/oder die Vorflutung mit der Antriebsvorrichtung der Siebscheibe 2 gekoppelt ist. Dabei ist der Kolbenantrieb derart ausgebildet, dass der Schusskolben 13 entkoppelt werden kann, so dass nicht bei jeder Umdrehung oder Taktung gespült bzw. vorgeflutet werden muss. Auch lässt sich der Füllgrad des Schusskolbens 13 einstellen. Der Schusskolben13 kann im Aus- oder Einlaufblock angeordnet sein.

### Bezugszeichenliste

- 1: Schmelzefilter
- 2: Siebscheibe
- 3: Siebeinsätze
- 4: Trennstege
- 5: Achse
- 6: Schmelzezuführöffnung
- 7: Klinkenantrieb
- 8: Hubkolben
- 9: Antriebshebel
- 10: Klinke
- 11: Zahnkranz
- 12: Kupplungsvorrichtung
- 13: Schusskolben
- 14: Freilauf
- 15: Gehäuse
- 16: Antriebswelle
- 17: Außenring

## Patentansprüche

1. Schmelzefilter (1), insbesondere zur Filterung von Kunststoffschmelzen in bzw. im Anschluss von Extrudern, mit einer Antriebsvorrichtung zum schrittweisen Drehantreiben einer Siebscheibe (2) die mindestens einen Siebeinsatz (3) haltert, wobei zumindest einer der Siebeinsätze (3) innerhalb des Schmelzefilters (1) derart in einen Schmelzestrom bewegbar ist, dass der Siebeinsatz (3) gegenüber einer Schmelzezuführöffnung (6) liegt, und mit einem Schusskolben (13) für eine Rückspülung und/oder Vorflutung,
**dadurch gekennzeichnet,**
**dass** der Schusskolben (13) mit der Antriebsvorrichtung zum schrittweisen Drehantreiben der Siebscheibe (2) mittels zwischen der Antriebsvorrichtung zum schrittweisen Drehantreiben der Siebscheibe (2) und dem Schusskolben (13) vorgesehener Kupplungsvorrichtung (12) verbunden, und über die Antriebsvorrichtung zum schrittweisen Drehantreiben der Siebscheibe (2) für eine Rückspülung und/oder Vorflutung gekoppelt antreibbar ist.

2. Schmelzefilter (1) nach Anspruch 1,
**dadurch gekennzeichnet,**
**dass** die Antriebsvorrichtung zum schrittweisen Drehantreiben der Siebscheibe (2) einen Klinkenantrieb (7) mit einer in einen Zahnkranz (11) der Siebscheibe (2) eingreifenden Klinke (10) oder einen auf einen Zahnkranz (11') der Siebscheibe (2) einwirkenden Freilauf (14) aufweist.

3. Schmelzefilter (1) nach Anspruch 1 oder 2,
**dadurch gekennzeichnet,**
**dass** der Schusskolben (13) für die Rückspülung und/oder Vorflutung über die Kupplungsvorrichtung (12) wahlweise verriegelbar oder entkoppelbar ist.

4. Schmelzefilter (1) nach Anspruch 3,
**dadurch gekennzeichnet,**
**dass** eine Steuer- bzw. Regelvorrichtung vorgesehen ist, über welche die Kupplungsvorrichtung (12) in ihrer Wirkweise der Verbindung programmier- bzw. einstellbar ist, so dass der Schusskolben (13) variabel zwischen fest und lose gekoppelt einstellbar mit der Antriebsvorrichtung zum schrittweisen Drehantreiben der Siebscheibe (2) gekoppelt ist.

5. Schmelzefilter (1) nach einem der Ansprüche 3 bis 4,
**dadurch gekennzeichnet,**
**dass** der Hub des Schusskolbens (13) einstellbar ist.

6. Schmelzefilter (1) nach einem der Ansprüche 3 bis 5,
**dadurch gekennzeichnet,**
**dass** das Maß und/oder der Füllgrad des Schusskolbens (13) einstellbar sind.

7. Schmelzefilter (1) nach einem der Ansprüche 1 bis 6,
**dadurch gekennzeichnet,**
**dass** der Schusskolben (13) in einem Aus- oder Einlaufblock angeordnet ist.

8. Schmelzefilter (1) nach einem der Ansprüche 1 bis 7,
**dadurch gekennzeichnet,**
**dass** die Antriebsvorrichtung zum schrittweisen Drehantreiben der Siebscheibe (2) einen Hubkolben (8) aufweist.

## Claims

1. Melt filter (1), in particular for filtering plastic melts in or in the connection of extruders, having a drive device for rotationally driving in a stepwise manner a screen disc (2) which holds at least one screen insert (3), wherein at least one of the screen inserts (3) within the melt filter (1) is movable into a melt stream such that the screen insert (3) is situated opposite a melt feed opening (6), and having a shot piston (13) for backflushing and/or pre-flooding,
**characterized**
**in that** the shot piston (13) is connected by means of a coupling device (12) to the drive device for rotationally driving in a stepwise manner the screen disc (2), said coupling device being provided between the drive device for rotationally driving in a stepwise manner the screen disc (2) and the shot piston (13), and is, for backflushing and/or pre-flooding, drivable in a coupled manner via the drive device for rotationally driving in a stepwise manner the screen disc (2).

2. Melt filter (1) according to Claim 1,
**characterized**
**in that** the drive device for rotationally driving in a stepwise manner the screen disc (2) has a pawl drive (7), which has a pawl (10) which engages into a gear ring (11) of the screen disc (2), or has a freewheel (14), which acts on a gear ring (11') of the screen disc (2).

3. Melt filter (1) according to Claim 1 or 2,
**characterized**
**in that** the shot piston (13) for the backflushing and/or pre-flooding is selectively lockable or decouplable via the coupling device (12).

4. Melt filter (1) according to Claim 3,
**characterized**
**in that** a control or regulating device is provided, via which the coupling device (12) is programmable or settable in terms of its effect on the connection, with the result that the shot piston (13) is coupled to the drive device for rotationally driving in a stepwise manner the screen disc (2) so as to be settable variably between fixedly and loosely coupled.

5. Melt filter (1) according to either of Claims 3 and 4,
**characterized**
**in that** the stroke of the shot piston (13) is settable.

6. Melt filter (1) according to one of Claims 3 to 5,
**characterized**
**in that** the measurement and/or degree of filling of the shot piston (13) are/is settable.

7. Melt filter (1) according to one of Claims 1 to 6,
**characterized**
**in that** the shot piston (13) is arranged in an outflow block or inflow block.

8. Melt filter (1) according to one of Claims 1 to 7,
**characterized**
**in that** the drive device for rotationally driving in a stepwise manner the screen disc (2) has a reciprocating piston (8).

## Revendications

1. Filtre à matière fondue (1), destiné en particulier à la filtration de matières fondues synthétiques dans ou après les extrudeuses, comprenant un dispositif d'entraînement destiné à entraîner en rotation pas à pas un disque de tamisage (2) qui supporte au moins un insert de tamisage (3), l'un au moins des inserts de tamisage (3) étant déplaçable à l'intérieur du filtre à matière fondue (1) dans un courant de matière fondue de telle sorte que l'insert de tamisage (3) soit placé en face d'un orifice d'alimentation en matière fondue (6) et comprenant un piston de poussée (13) destiné au lavage à contre-courant et/ou à l'évacuation,
**caractérisé en ce que** le piston de poussée (13) est relié au dispositif d'entraînement destiné à entraîner en rotation pas à pas le disque de tamisage (2) au moyen d'un dispositif d'accouplement (12) prévu entre le dispositif d'entraînement destiné à entraîner en rotation pas à pas le disque de tamisage (2) et le piston de poussée (13) et peut être entraîné, une fois accouplé, par le dispositif d'entraînement, destiné à entraîner en rotation pas à pas le disque de tamisage (2), pour effectuer un lavage à contre-courant et/ou une évacuation.

2. Filtre à matière fondue (1) selon la revendication 1,
**caractérisé en ce que** le dispositif d'entraînement destiné à entraîner en rotation pas à pas le disque de tamisage (2) comprend un entraînement à cliquet (7), pourvu d'un cliquet (10) s'engageant dans une couronne dentée (11) du disque de tamisage (2), ou une roue libre (14) agissant sur une couronne dentée (11') du disque de tamisage (2).

3. Filtre à matière fondue (1) selon la revendication 1 ou 2, **caractérisé en ce que** le piston de poussée (13) pour le lavage à contre-courant et/ou l'évacuation peut au choix être verrouillé ou découplé par le biais du dispositif d'accouplement (12).

4. Filtre à matière fondue (1) selon la revendication 3, **caractérisé en ce qu'**il est prévu un dispositif de commande ou de régulation permettant de programmer ou de régler le dispositif d'accouplement (12) quant à son mode de fonctionnement du raccordement de manière à accoupler le piston de poussée (13) au dispositif d'entraînement, destiné à entraîner en rotation pas à pas le disque de tamisage (2), de manière à pouvoir effectuer un réglage variable entre un accouplement solidaire et un accouplement lâche.

5. Filtre à matière fondue (1) selon l'une des revendications 3 et 4, **caractérisé en ce que** la course du piston de poussée (13) est réglable.

6. Filtre à matière fondue (1) selon l'une des revendications 3 à 5, **caractérisé en ce que** la dimension et/ou le degré de remplissage du piston de poussée (13) sont réglables.

7. Filtre à matière fondue (1) selon l'une des revendications 1 à 6, **caractérisé en ce que** le piston de poussée (13) est disposé dans un bloc de décharge ou d'admission.

8. Filtre à matière fondue (1) selon l'une des revendications 1 à 7, **caractérisé en ce que** le dispositif d'entraînement destiné à entraîner en rotation pas à pas le disque de tamisage (2) comporte un piston à mouvement alternatif (8).
